# FASCICULE DE BREVET EUROPEEN

(11) **EP 2 794 069 B1**
(45) Date de publication et mention de la délivrance du brevet: **04.11.2015**
(21) Numéro de dépôt: 12806554.7
(22) Date de dépôt: 22.11.2012
(51) Int. Cl.: B01D 53/50, C25C 3/22, B01D 53/68, B01D 53/83

(54) **PROCÉDÉ ET DISPOSITIF POUR AMÉLIORER LA CAPTATION DU SO2 DANS DES GAZ DE CUVES D'ÉLECTROLYSE**
VERFAHREN UND VORRICHTUNG ZUR VERBESSERUNG DER SO2-ABSCHEIDUNG IN GASEN ELEKTROLYTISCHER ZELLEN
PROCESS AND DEVICE FOR IMPROVING THE CAPTURE OF SO2 IN ELECTROLYTIC CELL GASES

(30) Priorité: 19.12.2011 FR 1161928
(43) Date de publication de la demande: 29.10.2014
(73) Titulaire: Fives Solios S.A., 78100 Saint-Germain-en-Laye, (FR)
(72) Inventeur: BOUHABILA, El-Hani, F-78100 Saint Germain en Laye (FR); MALARD, Thierry, F-78100 Saint Germain en Laye (FR)
(74) Mandataire: Cabinet Plasseraud
(86) Numéro de dépôt international: PCT/FR2012/052704
(87) Numéro de publication internationale: WO 2013/093268

(56) Documents cités:
- EP-A1- 2 360 296
- WO-A1-2010/142892
- US-A- 5 885 539
- US-A1- 2009 068 077

## Description

La présente invention porte sur un procédé et un dispositif pour capter le S02 présent dans les gaz qui proviennent de cuves pour la production industrielle d'aluminium par électrolyse ignée. Ce procédé est mis en oeuvre sur un groupe d'au moins deux réacteurs traversés en parallèle par un flux gazeux et alimentés au moins en partie en série en un agent de sorption du type matière pulvérulente, notamment des particules d'alumine, apte à adsorber des effluents présents dans le flux gazeux par la mise en contact de l'agent de sorption avec le flux gazeux.

L'utilisation de particules d'alumine dans des réacteurs de traitement de gaz pour adsorber l'acide fluorhydrique (HF) présent dans les gaz émanant des cuves pour la production industrielle d'aluminium par électrolyse ignée est une technologie bien connue et efficace. Il est également connu que cette alumine, avec sa grande surface d'adsorption (jusqu'à 82m²/g), peut aussi, sous certaines conditions, adsorber le dioxyde de soufre (S02) également présent dans les gaz de cuve.

Bien que l'alumine adsorbe très facilement le SO2, la captation du S02 présent dans les gaz provenant des cuves d'électrolyse n'est pas aisée, car l'alumine adsorbe préférentiellement le HF par rapport au SO2. Dans le cas où du HF et du S02 sont présents dans les gaz à traiter, pour pouvoir capter le SO2, il est nécessaire d'utiliser une quantité suffisante d'alumine pour que celle-ci ne soit pas saturée après avoir adsorbé le HF. En effet, dans le cas où l'alumine serait saturée en S02 à la suite du traitement d'un gaz ne contenant pas de HF, ce S02 serait désorbé si cette alumine était mise en contact avec un gaz contenant du HF, le HF venant prendre la place du S02 sur les particules d'alumine.

Par ailleurs, il est connu que la désorption du S02 de l'alumine se produit à partir d'une température d'environ 200°C alors que le HF ne se désorbe qu'à partir d'environ 400°C.

En pratique, la quantité d'alumine injectée dans les réacteurs de traitement des gaz est généralement supérieure de 10% à la quantité nécessaire pour adsorber le HF. Cette quantité d'alumine provenant du traitement des gaz est également celle nécessaire pour les cuves d'électrolyse, de sorte qu'elle y est consommée et qu'il n'est pas nécessaire d'alimenter les cuves avec de l'alumine fraiche. Il serait nécessaire d'injecter une quantité d'alumine beaucoup plus importante dans les réacteurs, sensiblement le double de celle nécessaire pour adsorber le HF, pour que, après la captation du HF, l'alumine adsorbe également le SO2. Il en résulterait une quantité d'alumine supplémentaire en sortie des réacteurs qui ne pourrait pas être consommée dans les cuves d'électrolyse.

Le brevet EP0793527 propose d'utiliser deux étages de traitement dans un même ensemble réacteur-filtre de sorte à capter successivement le HF puis le SO2. Les gaz à traiter chargés en HF et S02 traversent un premier étage composé du réacteur, où ils rencontrent de l'alumine régénérée. En sortie de ce réacteur, le HF est complètement adsorbé sur l'alumine. Les gaz sont alors dirigés vers un dispositif de séparation mécanique de l'alumine fluorée des gaz. En sortie de ce premier étage, les gaz sont ainsi épurés du HF. Ils sont ensuite dirigés vers le deuxième étage, le filtre, où de l'alumine fraîche est injectée pour capter le SO2. L'alumine chargée en S02 est enfin dirigée vers un désorbeur où le S02 est extrait de l'alumine. L'alumine ainsi régénérée est renvoyée dans le premier étage de traitement et le S02 concentré est envoyé dans un système de valorisation. Cette solution n'est pas pleinement satisfaisante car elle nécessite un dispositif encombrant et couteux de séparation de l'alumine fluorée dans le premier étage de traitement.

Pour pallier ces inconvénients, l'invention consiste en un procédé de captation du S02 présent dans des gaz qui proviennent de cuves pour la production industrielle d'aluminium par électrolyse ignée, mis en oeuvre sur un groupe d'au moins deux réacteurs traversés en parallèle par un flux gazeux et alimentés en un agent de sorption du type matière pulvérulente apte à adsorber des effluents présents dans le flux gazeux par la mise en contact de l'agent de sorption avec le flux gazeux, lesdits au moins deux réacteurs présentant chacun des moyens de collecte dudit agent de sorption après mise en contact avec ledit flux gazeux , au moins l'un desdits réacteurs présentant des moyens d'évacuation dudit agent de sorption après mise en contact avec ledit flux gazeux vers des moyens d'injection dans au moins un autre desdits réacteurs, caractérisé en ce qu'entre les moyens d'évacuation et les moyens d'injection, ledit agent de sorption est désorbé du S02 qu'il a adsorbé par au moins une mise en contact avec ledit flux gazeux avant de parvenir auxdits moyens d'évacuation.

Pour désorber le SO2, ledit agent de sorption est, par exemple, porté à une température voisine de 200°C, et, en tous cas restant très inférieure à 400°C pour ne pas désorber le HF. Dans le même but l'agent de sorption peut également être mis en contact avec un gaz vecteur. Ce gaz vecteur permet également de faciliter l'évacuation du S02 en dehors du système. Le chauffage de l'agent de sorption et le balayage de ce dernier avec un gaz vecteur sont deux moyens pour désorber l'agent de sorption qui sont avantageusement combinés pour une efficacité accrue.

Selon un exemple préféré et avantageux de réalisation de l'invention, l'agent de sorption est de l'alumine Al₂O₃.

Le gaz vecteur est par exemple de l'azote.

Selon un mode de réalisation de l'invention, le gaz vecteur est chauffé à une température d'au moins 200°C, mais restant voisine de 200°C, avant d'être mis en contact avec l'agent de sorption.

Selon un mode de mise en oeuvre avantageux de l'invention, les réacteurs sont agencés selon au moins une suite d'au moins deux réacteurs alimentés au moins en partie en série en agent de sorption, et l'agent de sorption est désorbé après chaque réacteur, éventuellement à l'exception du dernier de ladite suite, ou tous les deux réacteurs, ou après un nombre variable de réacteurs, de ladite suite, ou qu'à partir du réacteur de ladite suite dans lequel l'agent de sorption a atteint un niveau de saturation globale proche de 100%.

L'invention consiste également en un dispositif de captation du S02 présent dans des gaz qui proviennent de cuves pour la production industrielle d'aluminium par électrolyse ignée, comprenant un groupe d'au moins deux réacteurs traversés en parallèle par un flux gazeux et des moyens d'injection aptes à alimenter les réacteurs en un agent de sorption du type matière pulvérulente apte à adsorber des effluents présents dans le flux gazeux par la mise en contact de l'agent de sorption avec le flux gazeux, lesdits au moins deux réacteurs présentant chacun des moyens de collecte dudit agent de sorption après mise en contact avec ledit flux gazeux , au moins l'un desdits réacteurs présentant des moyens d'évacuation dudit agent de sorption après mise en contact avec ledit flux gazeux vers les moyens d'injection dans au moins un autre desdits réacteurs caractérisé en ce qu'il comprend, entre les moyens d'évacuation et les moyens d'injection , des moyens de désorbsion pour désorber l'agent de sorption du SO2, qu'il a adsorbé par au moins une mise en contact avec ledit flux gazeux avant de parvenir auxdits moyens d'évacuation.

Les moyens de désorbsion comprennent, par exemple, au moins un moyen de chauffage permettant de porter ledit agent de sorption à une température voisine de 200°C.

Les moyens de désorbsion peuvent également comprendre des moyens permettant de mettre ledit agent de sorption en contact avec un flux d'un gaz vecteur.

Avantageusement, les moyens de désorbsion combinent au moins un moyen de chauffage permettant de porter ledit agent de sorption à une température voisine de 200°C et des moyens permettant de mettre en contact ledit agent de sorption avec un flux d'un gaz vecteur.

Selon un exemple de réalisation de l'invention, ledit au moins un moyen de chauffage permet de chauffer ledit gaz vecteur , à une température d'au moins 200°C mais restant voisine de 200°C, avant l'injection dudit gaz vecteur dans un désorbeur où le gaz vecteur est mis en contact avec l'agent de sorption.

Selon un autre mode de réalisation, ledit au moins un moyen de chauffage est intégré à un désorbeur , recevant de l'agent de sorption, et un flux d'un gaz vecteur mis en contact dudit agent de sorption dans ledit désorbeur.

L'invention est préférentiellement applicable sur des réacteurs agencés en suite ou en cascade(s), si l'on considère la circulation de l'agent de sorption, tels que décrits dans le document de brevet WO2007096492, les réacteurs étant alimentés en agent de sorption au moins en partie en série. Ainsi, dans un premier mode de réalisation, un premier réacteur d'une suite ou cascade de réacteurs reçoit la totalité de la quantité d'agent de sorption frais nécessaire pour adsorber la totalité du HF contenu dans les gaz à l'entrée du premier réacteur. Depuis les moyens d'évacuation de ce premier réacteur, l'agent de sorption faiblement saturé et collecté par les moyens de collecte dudit premier réacteur est envoyé vers le deuxième réacteur de la suite ou cascade, et ainsi de suite. Ainsi, l'agent de sorption se sature au fur et à mesure de son passage dans les réacteurs en série. En sortie de chaque réacteur, à l'entrée duquel l'agent de sorption n'est pas saturé, ledit agent de sorption a adsorbé du HF mais également du SO2.

Le dispositif selon l'invention, pour la mise en oeuvre du procédé présenté ci-dessus, se caractérise en ce que les réacteurs sont agencés selon au moins une suite d'au moins deux réacteurs alimentés au moins en partie en série en agent de sorption, et des moyens pour désorber l'agent de sorption de S02 sont placés après chaque réacteur, éventuellement à l'exception du dernier de ladite suite, ou tous les deux réacteurs, ou après un nombre variable de réacteurs de ladite suite, ou qu'à partir du réacteur de ladite suite dans lequel l'agent de sorption a atteint un niveau de saturation globale proche de 100%.

Selon l'invention, le passage de l'agent de sorption (de préférence de l'alumine) dans un désorbeur, où l'agent de sorption est porté à une température voisine de 200°C et/ou mis en contact avec un flux d'un gaz vecteur lequel est chauffé à une température d'au moins 200°C mais restant voisine de 200°C si l'agent de sorption n'est pas chauffé, permet de désorber l'agent de sorption du S02 qu'il contient. Avantageusement, la température à laquelle est porté l'agent de sorption dans le désorbeur de S02 ne permet pas de désorber le HF. L'agent de sorption ainsi régénéré est envoyé dans le réacteur suivant de la suite ou cascade et ainsi de suite.

A la sortie du désorbeur, le S02 ou le gaz vecteur chargé en S02 est, par exemple, envoyé dans un système de valorisation.

Considérons le cas de 10 réacteurs en série, c'est-à-dire tels que chacun d'eux, sauf le premier de la série, ne reçoit de l'agent de sorption que des moyens d'évacuation du réacteur qui le précède dans la série, et un besoin d'une quantité « X » d'agent de sorption pour adsorber la totalité du HF contenu dans les gaz provenant des cuves d'électrolyse et traversant les 10 réacteurs en parallèle . Cette quantité « X » d'agent de sorption est injectée uniquement dans le premier réacteur de la série. A la sortie des moyens d'évacuation du premier réacteur, l'agent de sorption a capté du HF et la quasi-totalité du S02 contenu dans la fraction du flux gazeux ayant traversé ce premier réacteur. L'agent de sorption est alors saturé à environ 8 à 9% en HF et d'environ 4 à environ 10% en SO2, ce qui correspond à une saturation globale d'environ 12 à environ 19%. L'agent de sorption est ensuite envoyé dans un désorbeur de S02 afin de libérer la quasi-totalité du S02 de l'agent de sorption, en ramenant ainsi le taux de saturation globale à environ 9%. En aval du désorbeur, l'agent de sorption est alors envoyé au deuxième réacteur de la série. Ainsi, selon l'invention, en sortie des moyens d'évacuation de chaque réacteur, l'agent de sorption subit un traitement de régénération permettant de réduire le taux de saturation globale par la suppression du S02 qui a été adsorbé par cet agent au contact de la fraction de flux gazeux traversant ledit réacteur. Arrivé à l'entrée du dernier réacteur de la série, l'agent de sorption ayant un taux de saturation globale d'environ 90%, ne pourra adsorber que du HF. La mise en oeuvre de l'invention de la manière qui vient d'être décrite permet un taux d'élimination du SO2 généralement compris entre environ 60 et environ 90%.

Un désorbeur n'est pas nécessairement placé en sortie des moyens d'évacuation de chaque réacteur de la série. Les emplacements des désorbeurs sont définis par calcul, de sorte à trouver une configuration optimale prenant en compte l'efficacité de traitement et le coût de l'installation. Selon les cas, un désorbeur de S02 est placé après chaque réacteur, éventuellement à l'exception du dernier d'une suite ou série de réacteurs, ou tous les deux réacteurs ou après un certain nombre de réacteurs d'une suite ou série de réacteurs, ce nombre étant variable d'une suite ou série de réacteurs à une autre. Selon une variante de réalisation, un désorbeur de S02 n'est placé qu'à partir du réacteur d'une suite ou série de réacteurs dans lequel l'agent de sorption a atteint un niveau de saturation globale proche de 100%. Selon le nombre de réacteurs de la suite ou série et les concentrations en S02 et en HF des gaz, il est possible d'identifier l'emplacement exact du premier désorbeur ainsi que des désorbeurs suivants.

D'autres avantages et caractéristiques de l'invention ressortiront de la description donnée ci-dessous d'exemples de réalisation uniquement illustratifs et nullement limitatifs de la portée de l'invention, et en référence aux dessins ci-joints dans lesquels :
- la figure 1 est une représentation schématique d'un centre de traitement gazeux selon une forme de réalisation de l'invention, et
- la figure 2 est une représentation analogue à celle de la figure 1 d'une forme de réalisation de l'invention dans laquelle un gaz vecteur est chauffé avant sa distribution et son introduction dans les désorbeurs du centre de traitement et sa mise en contact avec l'agent de sorption contenu dans ces désorbeurs, et
- la figure 3 est une représentation analogue à celles des figures 1 et 2 d'une variante de réalisation dans laquelle l'agent de sorption est chauffé dans les désorbeurs, dans lesquels est introduit un gaz vecteur ainsi mis en contact avec l'agent de sorption réchauffé pour le désorbeur de SO2.

Comme représenté sur les figures là 3, la présente invention porte sur un centre de traitement de gaz 1 constitué d'une pluralité de réacteurs 2₁, 2₂,..., 2ₙ dans lesquels circule en parallèle un flux gazeux 3, de préférence ascendant, devant être épuré en effluents. Le premier réacteur 2₁ est alimenté en un agent de sorption frais du type matière pulvérulente, de type connu en soi, par exemple de l'alumine (Al2O3) issue d'un moyen de stockage 4 de matière pulvérulente fraiche, du type silo, et distribuée au premier réacteur 2₁ à l'aide d'un moyen de distribution 14, prévu entre le moyen de stockage 4 et le réacteur 2₁.

De manière plus précise, le moyen de distribution 14 relie le moyen de stockage 4 à un moyen d'injection 7, de type connu en soi, de la matière pulvérulente dans le réacteur 2₁. Le moyen de distribution 14 est, par exemple, une aéroglissière, étant entendu que le transport de l'agent de sorption du type matière pulvérulente est réalisé selon tout moyen connu dans l'art antérieur, par exemple selon un procédé pour le convoyage des matières pulvérulentes en lit hyperdense.

Le moyen de stockage 4, telle qu'une trémie déverse l'agent de sorption dans un unique moyen de distribution 14 déversant l'intégralité de son contenu dans le premier réacteur 2₁ par l'intermédiaire du moyen d'injection 7. Dans cet exemple de l'invention, les n-1 autres réacteurs 2₂,..., 2ₙ ne reçoivent pas d'agent de sorption frais issu du moyen de stockage 4.

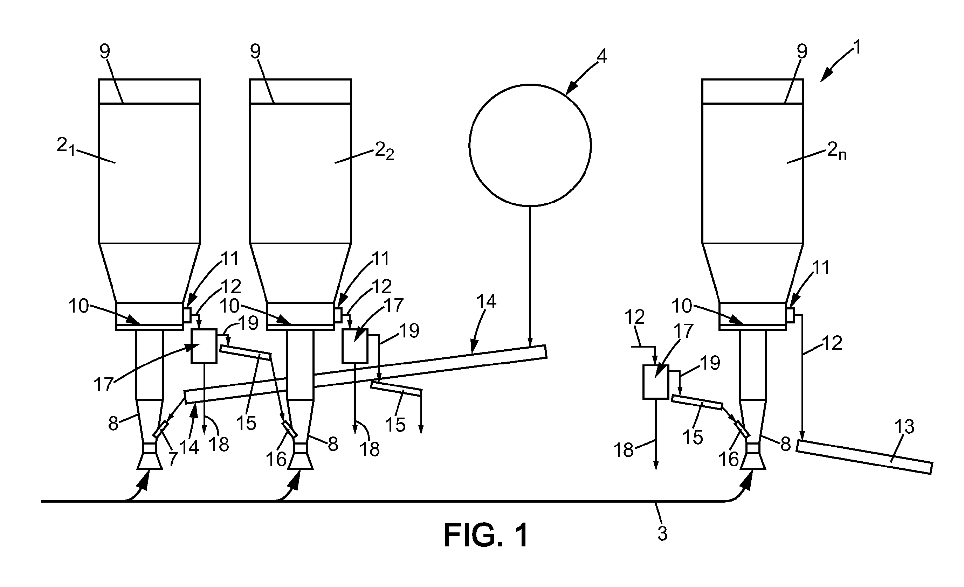

Par mesure de simplicité, il est uniquement représenté sur la figure 1 trois réacteurs 2₁, 2₂,..., 2ₙ, étant entendu que l'invention peut s'appliquer à tout centre de traitement gazeux comportant au moins deux réacteurs. Les réacteurs 2₁, 2₂,..., 2ₙ sont particulièrement destinés à permettre la mise en contact, selon tout moyen connu dans l'art antérieur, de la matière pulvérulente avec un flux gazeux devant être épuré en effluents.

Le principe de l'invention s'applique plus particulièrement à des flux gazeux 3 issus de cuves d'électrolyse d'aluminium, et contenant des effluents polluants du type agents fluorés, par exemple de l'acide fluorhydrique (HF), et dioxyde de soufre (S02) qui sont neutralisés par la matière pulvérulente, dans cet exemple de l'alumine Al₂O₃, par adsorption.

De manière préférentielle, les réacteurs 2₁, 2₂,..., 2ₙ sont tous identiques, c'est-à-dire qu'ils présentent la même capacité de traitement de flux gazeux. De cette manière, les réacteurs 2₁, 2₂,..., 2ₙ reçoivent chacun la même quantité de matière pulvérulente, étant entendu que chaque réacteur 2₁, 2₂,..., 2ₙ reçoit une égale fraction d'un même flux gazeux 3. Néanmoins, l'homme du métier peut adapter le principe selon l'invention à tout type de groupe de réacteurs, que les réacteurs soient tous identiques ou non.

Chacun des réacteurs 2₂,..., 2ₙ autres que le premier 2₁ est équipé d'un moyen d'injection 16 sensiblement identique au moyen d'injection 7 du premier réacteur 2₁. Avantageusement, le moyen d'injection 7, ou 16 est placé sensiblement à l'entrée d'une tuyère 8 du réacteur 2₁, ou 2₂,..., ou 2ₙ correspondant, dans laquelle entre la fraction correspondante du flux gazeux 3.

Une fois la matière pulvérulente injectée dans le réacteur 2₁, ou 2₂,..., ou 2ₙ, cette matière est mise en contact avec la fraction correspondante du flux de gaz 3 par tout moyen connu en soi, permettant une mise en contact optimale du flux gazeux 3 avec la matière pulvérulente, aboutissant à une épuration optimale des effluents polluants présents dans le flux gazeux. Lors de la mise en contact de la matière pulvérulente avec les fractions du flux gazeux 3, de préférence ascendantes, la matière pulvérulente est entraînée dans le flux gazeux 3 selon un mouvement avantageusement ascendant.

En aval de chaque réacteur 2₁, 2₂,..., 2ₙ, c'est-à-dire à leur partie supérieure, se trouvent des moyens de filtrage 9, par exemple du type filtre à tissu ou filtre à manches, empêchant le rejet hors du réacteur 2₁, 2₂,..., 2ₙ, et dans l'atmosphère, de grains de particules de matière pulvérulente et de poussières..

Après mise en contact de l'agent de sorption (la matière pulvérulente) avec le flux gazeux 3 et le filtrage du flux 3 par les moyens de filtrage 9, il est prévu, dans des trémies en bas des réacteurs 2₁, 2₂,..., 2ₙ., des moyens de collecte 10, de tout type connu en soi, des particules de matière pulvérulente, et ces moyens de collecte 10 sont reliés, par des moyens connus en soi, à des moyens d'évacuation 11 de l'agent de sorption chargé en effluents adsorbés dans le réacteur 2₁, 2₂,..., 2ₙ.

Les moyens d'évacuation 11 sont de type connus en soi et se présentent, par exemple, sous la forme d'un ou plusieurs orifice(s) relié(s) à une conduite d'évacuation 12, par exemple, du type aéroglissière, au moins une conduite d'évacuation 12 mais éventuellement chacune d'elles se déversant dans un désorbeur de S02 17, sauf pour le dernier réacteur 2ₙ, pour lequel la conduite 12 se déverse dans une conduite principale 13 d'agent de sorption chargé en effluents, et en particulier fluoré.

Ainsi, comme de l'agent de sorption frais, telle que de l'alumine fraîche, est alimenté dans le premier réacteur 2₁ dans lequel circule un flux gazeux 3 devant être défluoré et désulfuré, il est obtenu, dans la conduite d'évacuation 12 correspondante de l'alumine fluorée et sulfurée.

Les désorbeurs de S02 17 sont conçus de sorte à permettre la mise en contact, selon tout moyen connu dans l'art antérieur, de la matière pulvérulente en provenance des conduites d'évacuation 12 avec un flux gazeux vecteur. Il est avantageux que, dans les désorbeurs 17, la matière pulvérulente soit maintenue dans un état fluidisé.

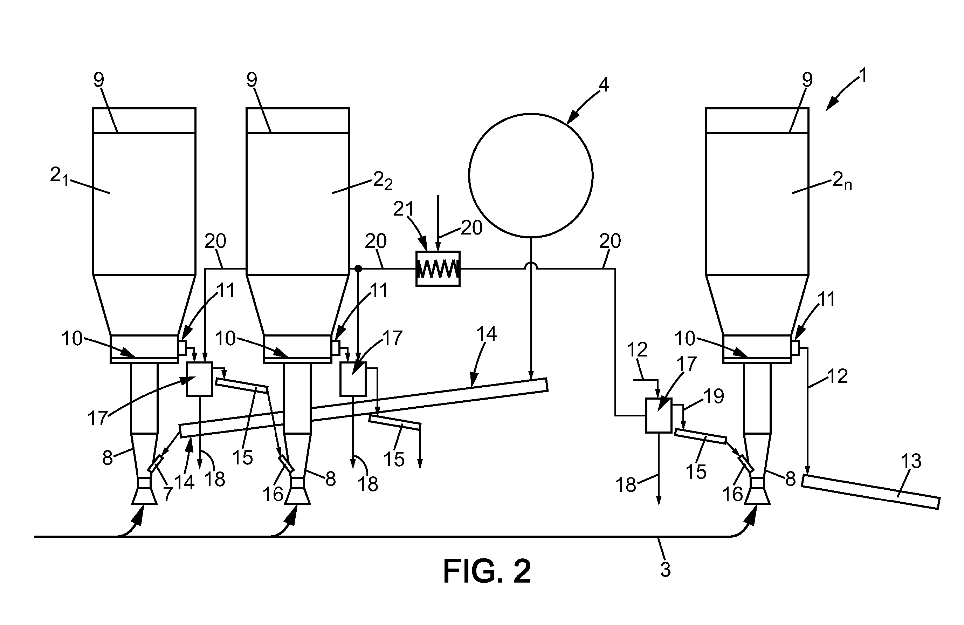

Dans l'exemple de réalisation de la figure 2, le gaz vecteur, transporté depuis une source (non représentée) à chacun des désorbeurs 17 par des canalisations 20, est de l'azote. Selon la figure 2, ce gaz vecteur est préchauffé à une température supérieure à 200°C mais restant voisine de 200°C dans un dispositif de chauffage 21 centralisé, avant son injection dans chacun des désorbeur 17 à l'extrémité aval d'une canalisation 20 correspondante, cette température étant de préférence dans une plage s'étendant de 200°C à 250°C.

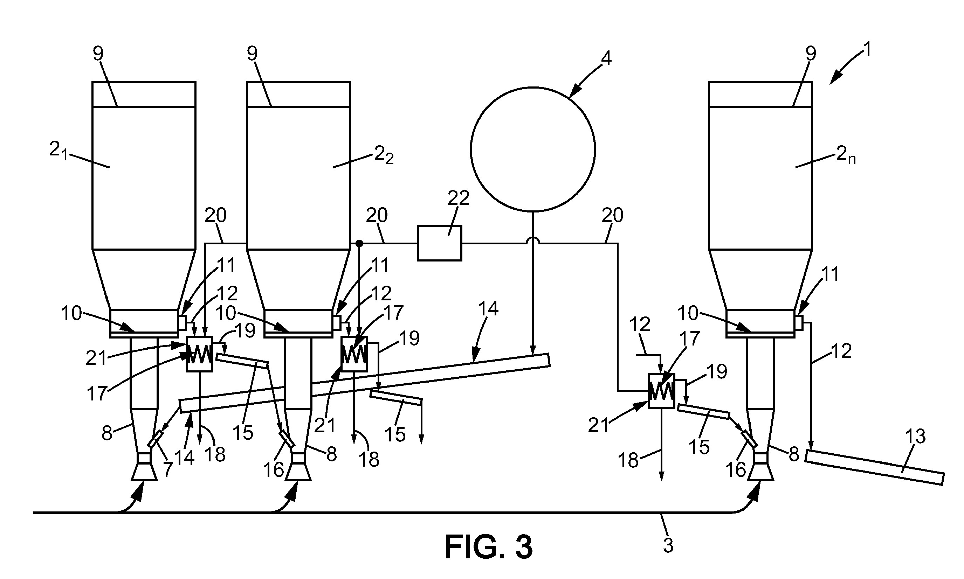

Selon un autre mode de réalisation, représenté sur la figure 3 le gaz vecteur, fourni par une source 22 reliée à chaque désorbeur 17 par une canalisation 20, n'est pas préchauffé avant d'être injecté dans les désorbeurs 17. Ces derniers sont équipés chacun de moyens de chauffage 21 dédiés, intégrés dans le désorbeur 17 correspondant, et permettant de porter la matière pulvérulente à désorber à une température d'environ 200°C ou voisine de 200°C. Par exemple, cette température est dans la plage s'étendant de 180°C à 250°C.

Les moyens de chauffage 21 de la figure 3 et le dispositif de chauffage 21 de la figure 2 peuvent être de tout type connu en soi, par exemple électrique (à résistance chauffante).

En sortie de chaque désorbeur 17, le gaz vecteur chargé en S02 est, par exemple, canalisé par une conduite 18 vers un dispositif de traitement, non représenté sur ces figures 1 à 3, et permettant de séparer le S02 du gaz vecteur 20.

En sortie du désorbeur 17 du premier réacteur 2₁, la totalité de l'agent de sorption chargé en HF et désorbé du S02 est transféré au moyens d'injection 16 du second réacteur 2₂ par l'intermédiaire d'une conduite d'évacuation 19 reliée à une aéroglissière de recyclage 15 de l'agent de sorption, également avantageusement du type à lit fluidisé, ou de tout type connu en soi permettant le transport de matières pulvérulentes ou d'agents de sorption. Il en est de même entre le deuxième 2₂ et le troisième réacteur, et ainsi de suite jusqu'au dernier réacteur 2ₙ, dont les moyens d'injection 16 reçoivent, par une conduite d'évacuation 19 et une aéroglissière de recyclage 15 correspondantes, tout l'agent de sorption chargé en HF et désorbé en S02 dans le désorbeur 17 en sortie de l'avant-dernier réacteur 2ₙ₋₁ et qui a été filtré et collecté dans l'avant-dernier réacteur 2ₙ₋₁ (non représenté sur les figure 1 à 3) de sorte que les n réacteurs de cette suite sont agencés en série pour ce qui concerne la circulation de l'agent de sorption entre le moyen de distribution 14 alimentant le premier réacteur 2₁ et la conduite principale 13, en sortie du dernier réacteur 2ₙ.

De cette manière, dans le cas de l'épuration du HF et du S02 contenu dans des gaz résiduaires issus de cuves d'électrolyse d'aluminium, la quantité d'alumine fraîche (agent de sorption) séjourne un certain temps dans le premier réacteur 2₁ où elle s'enrichit en HF et SO2. Elle est ensuite traitée pour désorber le S02 avant d'être déversée totalement dans un second réacteur 2₂. Elle y séjourne le même temps que dans le premier réacteur 2₁ et continue à s'enrichir en fluorures et capte de nouveau du SO2. Le processus se déroule ainsi de suite jusqu'au n-ième réacteur 2ₙ où elle se déverse dans une conduite principale 13 d'alumine fluorée pour son recyclage dans des cuves d'électrolyse, par exemple, ou dans tout autre type de moyen de stockage ou de recyclage. Ainsi, seul le n-ième réacteur 2ₙ est relié à une conduite principale 13 où l'agent de sorption, chargée en effluents après son passage dans les n réacteurs, mais désorbé en S02 est déversé.

L'invention ne se limite pas aux installations selon les figures 1 à 3 décrites ci-dessus, mais s'étend aussi aux installations dans lesquelles tous les réacteurs d'au moins une suite de réacteurs sauf le premier de cette suite, parmi le groupe de réacteurs de l'installation ont chacun leur moyens d'injection 16 alimentés non seulement en agent de sorption recyclé depuis les moyens d'évacuation 11 du réacteur immédiatement précédent dans la suite, mais également en agent de sorption frais provenant des moyens de stockage 4, dans une quantité inférieure à celle reçue par les moyens d'injection 7 du premier réacteur de cette suite, qui reste le seul réacteur alimenté uniquement en agent de sorption frais, comme représenté sur la figure 3 et la demie-vue de droite de la figure 5 de WO 2007/096492 et comme décrit en référence à ces figures dans ce document de brevet auquel on se reportera pour de plus amples précisions à ce sujet. De même que sur la figure 4 de WO 2007/096492, l'un des réacteurs du groupe de réacteurs d'une installation selon l'invention peut être le premier réacteur alimenté uniquement en agent de sorption frais et commun à deux suites de réacteurs alimentés en série chacun en agent de sorption recyclé depuis le réacteur immédiatement précédent dans la suite, ou en série-parallèle, chacun recevant non seulement de l'agent de sorption recyclé depuis le réacteur précédent, mais aussi de l'agent de sorption frais. En outre, et comme connu de l'état de la technique, au moins un réacteur du groupe de l'installation, et éventuellement, tous les réacteurs d'au moins une même suite ou série du groupe y compris le premier et le dernier réacteurs de cette suite ou série ont chacun des moyens d'injection 7 ou 16 également alimentés en agent de sorption recyclé à partir des moyens d'évacuation 11 de ce même réacteur considéré.

Pour toutes ces raisons, selon les installations conformes à l'invention, il n'est pas indispensable que chaque réacteur mais que l'un au moins desdits réacteurs soit équipé d'un désorbeur 17, et il peut être indiqué de ne prévoir qu'un désorbeur 17 tous les deux, ou trois, ou quatre ou plus encore de réacteurs consécutifs d'une suite ou série, ce nombre de réacteurs pouvant varier d'une installation à l'autre. En alternative, un désorbeur 17 de S02 peut être installé après chacun des réacteurs ou certains d'entre-eux, seulement, dans une suite, à partir du réacteur de cette suite dans lequel l'agent de sorption a atteint un niveau de saturation globale proche de 100%, et de préférence son niveau de saturation maximum, mais qui peut être dans la plage s'étendant d'environ 85% à 100%.

## Revendications

1. Procédé de captation du S02 présent dans des gaz qui proviennent de cuves pour la production industrielle d'aluminium par électrolyse ignée, mis en oeuvre sur un groupe d'au moins deux réacteurs (2₁, 2₂, ...,2ₙ,) traversés en parallèle par un flux gazeux (3) et alimentés en un agent de sorption du type matière pulvérulente apte à adsorber des effluents présents dans le flux gazeux (3) par la mise en contact de l'agent de sorption avec le flux gazeux (3), lesdits au moins deux réacteurs (2₁, 2₂, , ..., 2ₙ, ) présentant chacun des moyens de collecte (10) dudit agent de sorption après mise en contact avec ledit flux gazeux (3), au moins l'un desdits réacteurs (2₁, 2₂, , ..., 2ₙ, ) présentant des moyens d'évacuation (11) dudit agent de sorption après mise en contact avec ledit flux gazeux (3) vers des moyens d'injection (16) dans au moins un autre desdits réacteurs (2₁, 2₂, , ..., 2ₙ, ), **caractérisé en ce qu'**entre les moyens d'évacuation (11) et les moyens d'injection (16), ledit agent de sorption est désorbé du S02 qu'il a adsorbé par au moins une mise en contact avec ledit flux gazeux avant de parvenir auxdits moyens d'évacuation.

2. Procédé selon la revendication 1, **caractérisé en ce que** l'agent de sorption est de l'alumine Al₂O₃.

3. Procédé selon l'une quelconque des revendications 1 et 2, **caractérisé en ce que** l'agent de sorption est désorbé de S02 en étant porté à une température voisine de 200°C.

4. Procédé selon l'une quelconque des revendications 1 à 3, **caractérisé en ce que** l'agent de sorption est désorbé de S02 en étant mis en contact avec un gaz vecteur (20).

5. Procédé selon la revendication 4, **caractérisé en ce que** le gaz vecteur (20) est de l'azote.

6. Procédé selon l'une quelconque des revendications 4 et 5, **caractérisé en ce que** le gaz vecteur (20) est chauffé, à une température d'au moins 200°C mais restant voisine de 200°C, avant d'être mis en contact avec l'agent de sorption.

7. Procédé selon la revendication 1, **caractérisé en ce que** les réacteurs sont agencés selon au moins une suite d'au moins deux réacteurs alimentés au moins en partie en série en agent de sorption, et l'agent de sorption est désorbé après chaque réacteur, éventuellement à l'exception du dernier (2n) de ladite suite, ou tous les deux réacteurs, ou après un nombre variable de réacteurs de ladite suite, ou qu'à partir du réacteur de ladite suite dans lequel l'agent de sorption a atteint un niveau de saturation globale proche de 100%.

8. Dispositif de captation du S02 présent dans des gaz qui proviennent de cuves pour la production industrielle d'aluminium par électrolyse ignée, comprenant un groupe d'au moins deux réacteurs (2₁, 2₂, , ..., 2ₙ,) traversés en parallèle par un flux gazeux (3) et des moyens d'injection aptes à alimenter les réacteurs en un agent de sorption du type matière pulvérulente apte à adsorber des effluents présents dans le flux gazeux (3) par la mise en contact de l'agent de sorption avec le flux gazeux (3), lesdits au moins deux réacteurs (2₁, 2₂, , ..., 2ₙ, ) présentant chacun des moyens de collecte (10) dudit agent de sorption après mise en contact avec ledit flux gazeux (3), au moins l'un desdits réacteurs (2₁, 2₂, , ..., 2ₙ,) présentant des moyens d'évacuation (11) dudit agent de sorption après mise en contact avec ledit flux gazeux (3) vers les moyens d'injection (16) dans au moins un autre desdits réacteurs (2₁, 2₂, , ..., 2ₙ, ), **caractérisé en ce qu'**il comprend, entre les moyens d'évacuation (11) et les moyens d'injection (16), des moyens de désorbsion (17) pour désorber l'agent de sorption du SO2 qu 'il a adsorbé par au moins une mise en contact avec ledit flux gazeux (3) avant de parvenir auxdits moyens d'évacuation (11).

9. Dispositif selon la revendication 8, **caractérisé en ce que** lesdits moyens de désorbsion (17) comprennent au moins un moyen de chauffage (21) permettant de porter ledit agent de sorption à une température voisine de 200°C.

10. Dispositif selon l'une quelconque des revendications 8 et 9, **caractérisé en ce que** lesdits moyens de désorbsion (17) comprennent des moyens permettant de mettre ledit agent de sorption en contact avec un flux d'un gaz vecteur (20).

11. Dispositif selon la revendication 10 telle que rattachée à la revendication 9, **caractérisé en ce que** ledit au moins un moyen de chauffage (21) permet de chauffer ledit gaz vecteur (20) à une température d'au moins 200°C, mais restant voisine de 200°C, avant l'injection dudit gaz vecteur dans un désorbeur (17), où le gaz vecteur est mis en contact avec l'agent de sorption.

12. Dispositif selon l'une quelconque des revendications 9 et 10, **caractérisé en ce qu'**au moins un moyen de chauffage (21) est intégré à un désorbeur (17) recevant de l'agent de sorption et un flux d'un gaz vecteur mis en contact dudit agent de sorption dans ledit désorbeur (17).

13. Dispositif selon l'une quelconque des revendications 8 à 12, **caractérisé en ce que** les réacteurs sont agencés selon au moins une suite d'au moins deux réacteurs (2₁, 2₂, ..., 2ₙ) alimentés au moins en partie en série en agent de sorption, et des moyens (17) pour désorber l'agent de sorption de S02 sont placés après chaque réacteur, éventuellement à l'exception du dernier (2n) de ladite suite, ou tous les deux réacteurs, ou après un nombre variable de réacteurs de ladite suite, ou qu'à partir du réacteur de ladite suite dans lequel l'agent de sorption a atteint un niveau de saturation globale proche de 100%.

## Patentansprüche

1. Verfahren zur Abscheidung des SO2, das in Gasen vorhanden ist, die aus Zellen zur industriellen Aluminiumproduktion durch Schmelzflusselektrolyse stammen, wobei das Verfahren in einer Gruppe von zumindest zwei Reaktoren (2₁, 2₂, ..., 2ₙ) ausgeführt wird, durch die parallel ein Gasstrom (3) strömt und die mit einem Sorbens von der Art eines pulverförmigen Stoffs gespeist werden, das geeignet ist, im Gasstrom (3) vorhandene Abgänge durch das Inkontaktbringen des Sorbens mit dem Gasstrom (3) zu adsorbieren, wobei die zumindest zwei Reaktoren (2₁, 2₂, , ..., 2ₙ) jeweils Mittel (10) zur Sammlung des Sorbens nach dem Inkontaktbringen mit dem Gasstrom (3) aufweisen, wobei zumindest einer der Reaktoren (2₁, 2₂,, .... 2ₙ) Mittel (11) zur Ableitung des Sorbens nach dem Inkontaktbringen mit dem Gasstrom (3) zu Mitteln (16) zur Einleitung in zumindest einen anderen der Reaktoren (2₁, 2₂, , ..., 2ₙ) aufweist,
**dadurch gekennzeichnet, dass** zwischen den Ableitungsmitteln (11) und den Einleitungsmitteln (16) zur Einleitung aus dem Sorbens das SO2, das es durch zumindest ein Inkontaktbringen mit dem Gasstrom adsorbiert, bevor es zu den Ableitungsmitteln gelangt, desorbiert wird.

2. Verfahren nach Anspruch 1, **dadurch gekennzeichnet, dass** das Sorbens das Aluminiumoxid Al₂O₃ ist.

3. Verfahren nach einem der Ansprüche 1 und 2, **dadurch gekennzeichnet, dass** das S02 aus dem Sorbens desorbiert wird, indem dieses auf eine Temperatur nahe 200 °C gebracht wird.

4. Verfahren nach einem der Ansprüche 1 bis 3, **dadurch gekennzeichnet, dass** das S02 aus dem Sorbens desorbiert wird, indem dieses mit einem Vektorgas (20) in Kontakt gebracht wird.

5. Verfahren nach Anspruch 4, **dadurch gekennzeichnet, dass** das Vektorgas (20) Stickstoff ist.

6. Verfahren nach einem der Ansprüche 4 und 5, **dadurch gekennzeichnet, dass** das Vektorgas (20) auf eine Temperatur von mindestens 200 °C, die allerdings nahe 200 °C bleibt, erhitzt wird, bevor es mit dem Sorbens in Kontakt gebracht wird.

7. Verfahren nach Anspruch 1, **dadurch gekennzeichnet, dass** die Reaktoren in zumindest einer Folge von zumindest zwei Reaktoren angeordnet sind, die zumindest teilweise in Reihe mit Sorbens gespeist werden, und dass das Sorbens nach jedem Reaktor, eventuell mit Ausnahme des letzten (2n) der Folge, oder allen beiden Reaktoren oder nach einer variablen Anzahl an Reaktoren der Folge oder ab dem Reaktor der Folge, in dem das Sorbens ein globales Sättigungsniveau nahe 100 % erreicht hat, desorbiert wird.

8. Vorrichtung zur Abscheidung des SO2, das in Gasen vorhanden ist, die aus Zellen zur industriellen Aluminiumproduktion durch Schmelzflusselektrolyse stammen, umfassend eine Gruppe von zumindest zwei Reaktoren (2₁, 2₂, , ..., 2ₙ ), durch die parallel ein Gasstrom (3) strömt, und Einleitungsmittel, die geeignet sind, die Reaktoren mit einem Sorbens von der Art eines pulverförmigen Stoffs zu speisen, das geeignet ist, im Gasstrom (3) vorhandene Abgänge durch Inkontaktbringen des Sorbens mit dem Gasstrom (3) zu adsorbieren, wobei die zumindest zwei Reaktoren (2₁, 2₂, , ..., 2ₙ ) jeweils Mittel (10) zur Sammlung des Sorbens nach dem Inkontaktbringen mit dem Gasstrom (3) aufweisen, wobei zumindest einer der Reaktoren (2₁, 2₂, , ..., 2ₙ) Mittel (11) zur Ableitung des Sorbens nach dem Inkontaktbringen mit dem Gasstrom (3) zu den Mitteln (16) zu Einleitung in zumindest einen anderen der Reaktoren (2₁, 2₂,, .... 2ₙ) aufweist, **dadurch gekennzeichnet, dass** sie zwischen den Ableitungsmitteln (11) und den Einleitungsmitteln (16) Desorptionsmittel (17) umfasst, um aus dem Sorbens das SO2, das es durch zumindest ein Inkontaktbringen mit dem Gasstrom (3) adsorbiert, bevor es zu den Ableitungsmitteln (11) gelangt, zu desorbieren.

9. Vorrichtung nach Anspruch 8, **dadurch gekennzeichnet, dass** die Desorptionsmittel (17) zumindest ein Heizmittel (21) umfassen, das es ermöglicht, das Sorbens auf eine Temperatur nahe 200 °C zu bringen.

10. Vorrichtung nach einem der Ansprüche 8 und 9, **dadurch gekennzeichnet, dass** die Desorptionsmittel (17) Mittel umfassen, die es ermöglichen, das Sorbens mit einem Vektorgasstrom (20) in Kontakt zu bringen.

11. Vorrichtung nach Anspruch 10, wie zurückbezogen auf Anspruch 9, **dadurch gekennzeichnet, dass** das zumindest eine Heizmittel (21) es ermöglicht, das Vektorgas (20) auf eine Temperatur von zumindest 200 °C, die allerdings nahe 200 °C bleibt, zu erhitzen, bevor das Vektorgas in einen Desorber (17) eingeleitet wird, wo das Vektorgas mit dem Sorbens in Kontakt gebracht wird.

12. Vorrichtung nach einem der Ansprüche 9 und 10, **dadurch gekennzeichnet, dass** zumindest ein Heizmittel (21) in einen Desorber (17) integriert ist, der das Sorbens und einen Strom eines Vektorgases, das im Desorber (17) mit dem Sorbens in Kontakt gebracht wird, aufnimmt.

13. Vorrichtung nach einem der Ansprüche 8 bis 12, **dadurch gekennzeichnet, dass** die Reaktoren in zumindest einer Folge von zumindest zwei Reaktoren (2₁, 2₂, ..., 2ₙ) angeordnet sind, die zumindest teilweise in Reihe mit Sorbens gespeist werden, und dass nach jedem Reaktor, eventuell mit Ausnahme des letzten (2ₙ) der Folge, oder allen beiden Reaktoren oder nach einer variablen Anzahl an Reaktoren der Folge oder ab dem Reaktor der Folge, in dem das Sorbens ein globales Sättigungsniveau nahe 100 % erreicht hat, Mittel (17) zum Desorbieren von S02 aus dem Sorbens angeordnet sind.

## Claims

1. Method of capturing the S02 present in gases originating from cells for the industrial production of aluminium by igneous electrolysis, implemented over a group of at least two reactors (2₁, 2₂, ..., 2ₙ,) passed through in parallel by a gas stream (3) and supplied with a sorption agent of the powder material type capable of adsorbing effluents present in the gas stream (3) by placing the sorption agent in contact with the gas stream (3), said at least two reactors (2₁, 2₂, , ..., 2ₙ,) each having means (10) of collecting said sorption agent after it has been placed in contact with said gas stream (3), at least one of said reactors (2₁, 2₂,, ..., 2ₙ,) having means (11) of discharging said sorption agent after it has been placed in contact with said gas stream (3) to means (16) of injection into at least another one of said reactors (2₁, 2₂, , ..., 2ₙ,), **characterized in that** between the discharge means (11) and the injection means (16), the S02 that the sorption agent has adsorbed by being placed in contact at least once with said gas stream is desorbed from said sorption agent before said sorption agent reaches said discharging means.

2. Method according to claim 1, **characterized in that** the sorption agent is alumina Al₂O₃.

3. Method according to any one of claims 1 and 2, **characterized in that** S02 is desorbed from the sorption agent by said sorption agent being brought to a temperature close to 200°C.

4. Method according to any one of claims 1 to 3, **characterized in that** S02 is desorbed from the sorption agent by placing the sorption agent in contact with a carrier gas (20).

5. Method according to claim 4, **characterized in that** the carrier gas (20) is nitrogen.

6. Method according to any one of claims 4 and 5, **characterized in that** the carrier gas (20) is heated to a temperature of at least 200°C, but remaining close to 200°C, before being placed in contact with the sorption agent.

7. Method according to claim 1, **characterized in that** the reactors are arranged in at least one sequence of at least two reactors supplied at least partly in series with sorption agent, and the sorption agent is desorbed after each reactor, optionally with the exception of the last (2ₙ) in said sequence, or every two reactors, or after a variable number of reactors in said sequence, or only starting from the reactor in said sequence in which the sorption agent has reached an overall saturation level close to 100%.

8. Device for capturing the S02 present in gases originating from cells for the industrial production of aluminium by igneous electrolysis, implemented over a group of at least two reactors (2₁, 2₂, , ..., 2ₙ,) passed through in parallel by a gas stream (3) and supplied with a sorption agent of the powder material type capable of adsorbing effluents present in the gas stream (3) by placing the sorption agent in contact with the gas stream (3), said at least two reactors (2₁, 2₂, , ..., 2ₙ,) each having means (10) of collecting said sorption agent after it has been placed in contact with said gas stream (3), at least one of said reactors (2₁, 2₂, , ..., 2ₙ,) having means (11) of discharging said sorption agent after it has been placed in contact with said gas stream (3) to means (16) of injection into at least another one of said reactors (2₁, 2₂, , ..., 2ₙ,), **characterized in that** it comprises, between the discharge means (11) and the injection means (16), desorption means (17) for desorbing from the sorption agent the S02 that said sorption agent has adsorbed by being placed in contact at least once with said gas stream (3) before said sorption agent reaches said discharge means (11).

9. Device according to claim 8, **characterized in that** said desorption means (17) comprise at least one heating means (21) making it possible to bring said sorption agent to a temperature close to 200°C.

10. Device according to any one of claims 8 and 9, **characterized in that** said desorption means (17) comprise means making it possible to place said sorption agent in contact with a carrier gas stream (20).

11. Device according to claim 10 as appended to claim 9, **characterized in that** said at least one heating means (21) makes it possible to heat the carrier gas (20) to a temperature of at least 200°C, but remaining close to 200°C, before the injection of said carrier gas into a desorbing unit (17) in which said carrier gas is placed in contact with the sorption agent.

12. Device according to any one of claims 9 and 10, **characterized in that** at least one heating means (21) is incorporated into a desorbing unit (17) receiving sorption agent, and a carrier gas stream is placed in contact with said sorption agent in said desorbing unit (17).

13. Device according to any one of claims 8 to 12, **characterized in that** the reactors are arranged in at least one sequence of at least two reactors (2₁, 2₂, ..., 2ₙ) supplied at least partly in series with sorption agent, and means (17) for desorbing S02 from the sorption agent are placed after each reactor, optionally with the exception of the last (2ₙ) in said sequence, or every two reactors, or after a variable number of reactors in said sequence, or starting from the reactor in said sequence in which the sorption agent has reached an overall saturation level of close to 100%.
